# EUROPEAN PATENT APPLICATION

(11) **EP 4 651 098 A1**
(43) Date of publication of application: **19.11.2025**
(21) Application number: 25175917.1
(22) Date of filing: 13.05.2025
(51) Int. Cl.: G06V 10/82

(54) **METHOD AND SYSTEM FOR TRAINING VIDEO GENERATION MODEL**

(30) Priority: 14.05.2024 KR 20240063186
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); SUNG, Myungchul, 06038 Seoul (KR); GWEON, Sungan, 06038 Seoul (KR); LEE, Kangsoo, 06038 Seoul (KR); LEE, Seongjin, 06038 Seoul (KR); YOU, Dongmin, 06038 Seoul (KR); HEO, Hoyeong, 06038 Seoul (KR); JO, Hanseok, 06038 Seoul (KR); LEE, Hwayoon, 06038 Seoul (KR)
(74) Representative: Studio Torta S.p.A.

(57) **Abstract**

A video generation model training method includes obtaining first time-series label data and time-series images of a first domain style, training a first image generation model based on the first time-series label data and the time-series images of the first domain style, obtaining a plurality of label data sets and a plurality of images of a second domain style, training a second image generation model based on the plurality of label data sets and the plurality of images of the second domain style, training a first video generation model based on the first image generation model, the first time-series label data, and the time-series images of the first domain style, and generating a second video generation model associated with the second domain style based on the second image generation model and the first video generation model.

## Description

### BACKGROUND

### Field

The present disclosure relates to a video generation model training method and system, and more specifically, to a method for training a video generation model that generates a photorealistic video by using a small amount of real-labeled data, and an information processing system therefor.

### Description of Related Art

AI (Artificial Intelligence) technology is a technology for developing a system that utilizes machine learning and deep learning technologies to learn large amounts of data, recognize patterns, and make intelligent decisions, and is being utilized in various areas such as predictive analytics, autonomous driving, medical diagnosis, language processing, and image generation.

Since most AI-based models are trained to deduce ground truth data from input data, accurate labeled data is very important. However, manual labeling is expensive, time-consuming, may cause labeling inconsistency issues when performed by multiple people, and may be inaccurate, while auto labeling is simple and fast but may suffer from inaccuracy.

In the case of one or more Al-based generation models that utilize labels, an image or video may be generated by receiving a label as an input, or an image corresponding to the label may be generated together. However, learning using a photorealistic video/image-label pair dataset (real video/image-label pair dataset) is needed, but if such a dataset does not exist, it is impossible to perform learning and to generate a video generation model. There are also limitations in collecting labeled data, and when the amount of labeled data is limited, it is problematic to secure sufficient training data. Therefore, there is a need to improve this.

### SUMMARY

The present disclosure provides a video generation model training method and system for solving the aforementioned problems.

The present disclosure may be implemented in various ways including a method, an apparatus (system), or a non-transitory computer-readable recording medium having recorded thereon instructions to be executed by a computer.

**In** some implementations, a video generation model training method performed by at least one processor, may include obtaining first time-series label data and time-series images of a first domain style associated with the first time-series label data, training a first image generation model associated with the first domain style based on the first time-series label data and the time-series images of the first domain style, obtaining a plurality of label data sets and a plurality of images of a second domain style, training a second image generation model associated with the second domain style based on the plurality of label data sets and the plurality of images of the second domain style, training a first video generation model associated with the first domain style based on the first image generation model, the first time-series label data, and the time-series images of the first domain style, and generating a second video generation model associated with the second domain style based on the second image generation model and the first video generation model, wherein the first domain style and the second domain style are different from each other.

In some implementations, the first domain style is a virtual domain style, and the second domain style is a real-world domain style.

In some implementations, the training the first image generation model may include extracting a label data subset and an image subset of the first domain style from the first time-series label data and the time-series images of the first domain style, obtaining a pre-trained video generation model including a spatial attention layer and a temporal attention layer, and fixing parameters associated with the temporal attention layer of the pre-trained video generation model and training some of parameters associated with the spatial attention layer of the pre-trained video generation model based on the label data subset and the image subset of the first domain style, wherein the first image generation model is a model generated by fine-tuning the pre-trained video generation model, and wherein the first image generation model is trained to generate a synthetic image of the first domain style based on specific label data.

In some implementations, the label data subset and the image subset of the first domain style are not temporally continuous.

In some implementations, the training the second image generation model may include obtaining a pre-trained video generation model including a spatial attention layer and a temporal attention layer, and fixing parameters associated with the temporal attention layer of the pre-trained video generation model and training some of parameters associated with the spatial attention layer of the pre-trained video generation model based on the plurality of label data sets and the plurality of images of the second domain style, wherein the second image generation model is a model generated by fine-tuning the pre-trained video generation model, and wherein the second image generation model is trained to generate a synthetic image of the second domain style based on specific label data.

In some implementations, the training the first video generation model may include fixing parameters associated with a spatial attention layer of the first image generation model and training some of parameters associated with a temporal attention layer of the first image generation model based on the first time-series label data and the time-series images of the first domain style, wherein the first video generation model is a model generated by fine-tuning the pre-trained video generation model, and wherein the first video generation model is trained to generate time-series images of the first domain style based on time-series label data.

In some implementations, the generating the second video generation model may include generating the second video generation model based on parameters associated with a spatial attention layer of the second image generation model and parameters associated with a temporal attention layer of the first video generation model.

In some implementations, the video generation model training method further includes receiving second time-series label data, and generating time-series images of the second domain style based on the second time-series label data by using the second video generation model.

In some implementations, the video generation model training method further includes down-sampling a frame rate of the first time-series label data to obtain down-sampled time-series label data, and training a label interpolation model based on the down-sampled time-series label data and the first time-series label data.

In some implementations, the video generation model training method further includes receiving second time-series label data, generating third time-series label data having an up-sampled frame rate of the second time-series label data by using the label interpolation model, and generating time-series images of the second domain style based on the third time-series label data by using the second video generation model.

In some implementations, a non-transitory computer-readable recording medium storing computer-readable instructions for execution by at least one processor that, when executed by the at least one processor, may cause the at least one processor to perform obtaining first time-series label data and time-series images of a first domain style associated with the first time-series label data, training a first image generation model associated with the first domain style based on the first time-series label data and the time-series images of the first domain style, obtaining a plurality of label data sets and a plurality of images of a second domain style, training a second image generation model associated with the second domain style based on the plurality of label data sets and the plurality of images of the second domain style, training a first video generation model associated with the first domain style based on the first image generation model, the first time-series label data, and the time-series images of the first domain style, and generating a second video generation model associated with the second domain style based on the second image generation model and the first video generation model, wherein the first domain style and the second domain style are different from each other.

In some implementations, an information processing system may include a memory, and at least one processor connected to the memory and configured to execute computer-readable instructions stored in the memory. The at least one processor may be configured to, obtain first time-series label data and time-series images of a first domain style associated with the first time-series label data, train a first image generation model associated with the first domain style based on the first time-series label data and the time-series images of the first domain style, obtain a plurality of label data sets and a plurality of images of a second domain style, train a second image generation model associated with the second domain style based on the plurality of label data sets and the plurality of images of the second domain style, train a first video generation model associated with the first domain style based on the first image generation model, the first time-series label data, and the time-series images of the first domain style, and generate a second video generation model associated with the second domain style based on the second image generation model and the first video generation model, wherein the first domain style and the second domain style are different from each other. According to some embodiments of the present disclosure, a simulator may be used to generate label videos and virtual videos in a quantity approaching infinity.

According to one or more aspects of the present disclosure, a label video with a low frame rate may be generated into a label video with a high frame rate.

According to one or more aspects of the present disclosure, a photorealistic video may be generated by using a small amount of labeled-real data.

The effects of the present disclosure are not limited to the effects mentioned above, and other effects not mentioned may be clearly understood by those of ordinary skill in the art to which the present disclosure pertains (referred to as "those of ordinary skill") from the description of the claims.

### BRIEF DESCRIPTION OF THE DRAWINGS

Embodiment(s) of the present disclosure will be described below with reference to the accompanying drawings, in which like reference numerals indicate like elements, but are not limited thereto.
FIG. 1 illustrates an overall schematic diagram of a video generation system.
FIG. 2 is a schematic diagram illustrating a configuration in which an information processing system is connected so as to be able to communicate with a plurality of user terminals in order to generate a photorealistic video.
FIG. 3 is a block diagram illustrating internal configurations of a user terminal and an information processing system.
FIG. 4 is a block diagram illustrating a detailed structure of a video generation system.
FIG. 5 illustrates a processing of a simulator.
FIG. 6 illustrates a processing of a label interpolation model.
FIG. 7 is a diagram illustrating an example of a method for training the label interpolation model.
FIG. 8 illustrates a video generation model associated with a real-world domain style.
FIG. 9 is a diagram illustrating an example of a method for training a first image generation model associated with a virtual domain style.
FIG. 10 is a diagram illustrating an example of a method for training a second image generation model associated with a real-world domain style.
FIG. 11 is a diagram illustrating an example of a method for training a video generation model associated with a virtual domain style.
FIG. 12 is a diagram illustrating an example of an inference method of the video generation model associated with a real-world domain style.
FIG. 13 is a flowchart illustrating an example of a video generation model training method.

### DETAILED DESCRIPTION

Hereinafter, example details for the practice of the present disclosure will be described in detail with reference to the accompanying drawings. However, in the following description, detailed descriptions of well-known functions or configurations will be omitted if it may make the subject matter of the present disclosure rather unclear.

In the accompanying drawings, the same or corresponding components are assigned the same reference numerals. In addition, in the following description of various examples, duplicate descriptions of the same or corresponding components may be omitted. However, even if descriptions of components are omitted, it is not intended that such components are not included in any example.

Advantages and features of the disclosed examples and methods of accomplishing the same will be apparent by referring to examples described below in connection with the accompanying drawings. However, the present disclosure is not limited to the examples disclosed below, and may be implemented in various forms different from each other, and the examples are merely provided to make the present disclosure complete, and to fully disclose the scope of the disclosure to those skilled in the art to which the present disclosure pertains.

The terms used herein will be briefly described prior to describing the disclosed example(s) in detail. The terms used herein have been selected as general terms which are widely used at present in consideration of the functions of the present disclosure, and this may be altered according to the intent of an operator skilled in the art, related practice, or introduction of new technology. In addition, in specific cases, certain terms may be arbitrarily selected by the applicant, and the meaning of the terms will be described in detail in a corresponding description of the example(s). Accordingly, the terms used in this disclosure should be defined based on the meaning of the term and the overall content of the present disclosure, rather than simply the name of the term.

As used herein, the singular forms "a," "an," and "the" are intended to include the plural forms as well, unless the context clearly indicates the singular forms. Further, the plural forms are intended to include the singular forms as well, unless the context clearly indicates the plural forms. Further, throughout the description, when a portion is stated as "comprising (including)" a component, it is intended as meaning that the portion may additionally comprise (or include or have) another component, rather than excluding the same, unless specified to the contrary.

Further, the term "module" or "unit" used herein refers to a software or hardware component, and "module" or "unit" performs certain roles. However, the meaning of the "module" or "unit" is not limited to software or hardware. The "module" or "unit" may be configured to be in an addressable storage medium or configured to play one or more processors. Accordingly, as an example, the "module" or "unit" may include components such as software components, object-oriented software components, class components, and task components, and at least one of processes, functions, attributes, procedures, subroutines, program code segments, drivers, firmware, micro-codes, circuits, data, database, data structures, tables, arrays, and variables. Furthermore, functions provided in the components and the "modules" or "units" may be combined into a smaller number of components and "modules" or "units", or further divided into additional components and "modules" or "units."

A "module" or "unit" may be implemented as a processor and a memory, or may be implemented as a circuit (circuitry). Terms such as circuit and circuitry may refer to circuits in hardware, but may also refer to circuits in software. The "processor" should be interpreted broadly to encompass a general-purpose processor, a central processing unit (CPU), a microprocessor, a digital signal processor (DSP), a neural processing unit (NPU), a controller, a microcontroller, a state machine, etc. Under some circumstances, the "processor" may refer to an application-specific integrated circuit (ASIC), a programmable logic device (PLD), a field-programmable gate array (FPGA), etc. The "processor" may refer to a combination for processing devices, e.g., a combination of a DSP and a microprocessor, a combination of a plurality of microprocessors, a combination of one or more microprocessors in conjunction with a DSP core, or any other combination of such configurations. In addition, the "memory" should be interpreted broadly to encompass any electronic component that is capable of storing electronic information. The "memory" may refer to various types of processor-readable media such as random access memory (RAM), read-only memory (ROM), non-volatile random access memory (NVRAM), programmable read-only memory (PROM), erasable programmable read-only memory (EPROM), electrically erasable PROM (EEPROM), flash memory, magnetic or optical data storage, registers, etc. The memory is said to be in electronic communication with a processor if the processor can read information from and/or write information to the memory. The memory integrated with the processor is in electronic communication with the processor.

In the present disclosure, a "system" may include at least one device among a server device and a cloud device, but is not limited thereto. For example, the system may be configured with one or more server devices. As another example, the system may be configured with one or more cloud devices. As yet another example, the server device and the cloud device may operate together in a combined configuration.

In the present disclosure, a "display" may refer to any display device associated with a computing device. For example, it may refer to any display device that can display any information/data controlled by or provided from the computing device.

In the present disclosure, an "artificial neural network model" may refer to a model including one or more artificial neural networks composed of an input layer, a plurality of hidden layers, and an output layer, in order to infer an answer for given inputs. Each layer may include a plurality of nodes.

In the present disclosure, "content information" may be information representing structural information of backgrounds and/or objects in an image (for example, category information, shape information, location information, etc. of the object). For example, the content information may include semantic segmentation information, panoptic segmentation information, instance segmentation information, SAM (Segmentation Anything Model) result information, bounding box information, edge information, depth information, and so forth.

In the present disclosure, a "domain style" may refer to the visual characteristics and/or artistic style of an image, representing a unique combination of elements such as the field of view (FOV) of the camera used to capture the image, camera parameters, colors, textures, patterns, shapes, and other visual elements defining the overall appearance and aesthetic quality of the image. For example, the domain style of an image may include a virtual domain style such as computer graphics (e.g., computer game graphics), and a real-world domain style such as an actual real-world scene captured by a particular camera. When different cameras are used to capture the real world, images captured by each camera may have a different domain style depending on the various characteristics of each camera.

In addition, terms such as first, second, A, B, (a), (b), etc. used in the following examples are only used to distinguish certain components from other components, and the nature, sequence, order, etc. of the components are not limited by the terms.

In addition, in the following examples, if a certain component is stated as being "connected," "combined" or "coupled" to another component, it is to be understood that there may be yet another intervening component "connected," "combined" or "coupled" between the two components, although the two components may also be directly connected or coupled to each other.

In addition, as used in the following examples, "comprise" and/or "comprising" does not foreclose the presence or addition of one or more other elements, steps, operations, and/or devices in addition to the recited elements, steps, operations, or devices.

Hereinafter, various examples of the present disclosure will be described in detail with reference to the accompanying drawings.

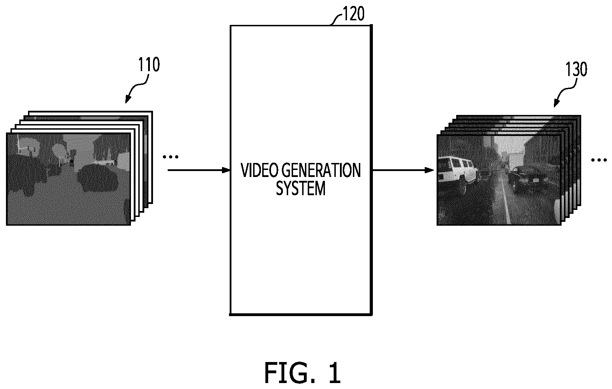

FIG. 1 is an overall schematic diagram illustrating a video generation system 120. The video generation system 120 may receive time-series label data 110 as input and generate time-series images 130 of a real-world domain style by performing an operation. The time-series label data 110 and the time-series images 130 of the real-world domain style may correspond to time-series frames of a video. The video generation system 120 may include a video generation model based on an artificial neural network.

Here, the label data may include the above-described content information, and, by way of example, may include bounding box information, 3D bounding box information, a semantic segmentation map, classification label information, an instance segmentation map, a depth map, and so on, but the present disclosure is not limited thereto.

The time-series label data 110 may be associated with a virtual domain style or a real-world domain style. If the time-series label data is associated with a virtual domain style, it may be time-series label data generated by a simulator described below (or generated based on time-series images created by a simulator). If the time-series label data is associated with a real-world domain style, it may be time-series label data generated based on time-series images capturing the real world with a specific camera.

In an example, the time-series label data 110 may be time-series label data having a low frame rate. For example, the frame rate of the time-series label data 110 may be lower than the frame rate of the time-series images 130 of the real-world domain style generated by the video generation system 120.

The video generation model included in the video generation system 120 may receive time-series label data with a low frame rate and convert it into time-series label data with a higher frame rate through a label interpolation model described below, and then may generate time-series images 130 of the real-world domain style with a high frame rate based thereon.

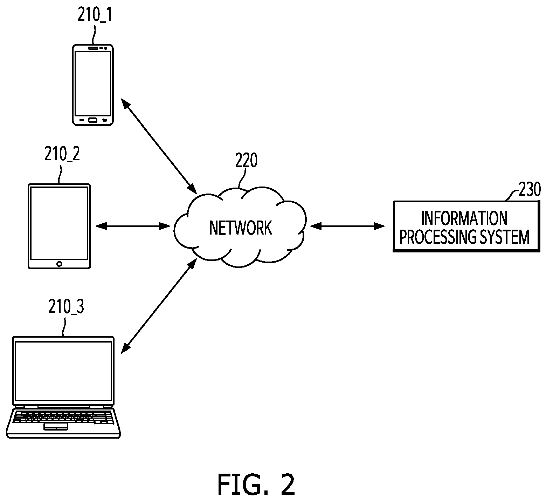

FIG. 2 is a schematic diagram illustrating a configuration in which an information processing system is connected so as to be able to communicate with a plurality of user terminals, in order to generate a photorealistic video. The photorealistic video may include the above-mentioned images of a real-world domain style. As shown, a plurality of user terminals 210_1, 210_2, 210_3 may be connected to an information processing system 230 configured to generate images of a real-world domain style via a network 220. Here, the plurality of user terminals 210_1, 210_2, 210_3 may include user terminals that receive the generated images of the real-world domain style.

In an example, the information processing system 230 may include one or more server devices and/or databases, or one or more distributed computing devices and/or distributed databases based on a cloud computing service, which store, provide, and execute a computer-executable program (for example, a downloadable application) and related to generating images of a real-world domain style.

The images of a real-world domain style provided by the information processing system 230 may be provided to users through an image generation application, a web browser, or a web browser extension installed on each of the plurality of user terminals 210_1, 210_2, 210_3. For example, the information processing system 230 may provide information in response to a request for generating a photorealistic video received from the user terminals 210_1, 210_2, 210_3 (or perform corresponding processing).

The plurality of user terminals 210_1, 210_2, 210_3 may communicate with the information processing system 230 via the network 220. The network 220 may be configured so that the plurality of user terminals 210_1, 210_2, 210_3 can communicate with the information processing system 230. Depending on the installation environment, the network 220 may be composed of a wired network, such as Ethernet, a wired home network (Power Line Communication), telephone line communication devices, RS-serial communication, etc.; a mobile communication network; a wireless network such as WLAN (Wireless LAN), Wi-Fi, Bluetooth, or ZigBee; or a combination thereof. The communication method is not limited, and in addition to a communication method that utilizes a communication network (e.g., a mobile communication network, wired internet, wireless internet, broadcasting network, satellite network, etc.) included in the network 220, short-range wireless communication between user terminals 210_1, 210_2, 210_3 may also be included.

Although a mobile phone terminal 210_1, a tablet terminal 210_2, and a PC terminal 210_3 are shown as examples of user terminals in FIG. 2, the present disclosure is not limited thereto, and each user terminal 210_1, 210_2, 210_3 may be any computing device capable of wired and/or wireless communication and capable of executing a photorealistic video generation service application or a web browser, or having installed such a photorealistic video generation service application or web browser. For example, the user terminal may include an AI speaker, smartphone, mobile phone, navigation device, computer, laptop, digital broadcasting terminal, PDA (Personal Digital Assistants), PMP (Portable Multimedia Player), tablet PC, game console, wearable device, IoT (internet of things) device, VR (virtual reality) device, AR (augmented reality) device, or set-top box. Also, although FIG. 2 illustrates three user terminals 210_1, 210_2, 210_3 communicating with the information processing system 230 via the network 220, the present disclosure is not limited thereto, and a different number of user terminals may be configured to communicate with the information processing system 230 via the network 220.

In FIG. 2, the user terminals 210_1, 210_2, 210_3 are shown receiving a generated photorealistic video by communicating with the information processing system 230. However, the present disclosure is not limited thereto. For example, the user terminal 210_1, 210_2, 210_3 may directly generate a photorealistic video without communicating with the information processing system 230.

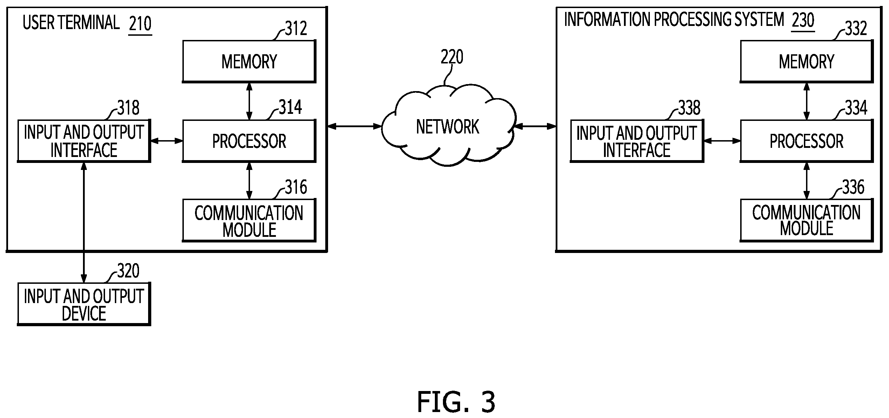

FIG. 3 is a block diagram illustrating internal configurations of a user terminal 210 and an information processing system 230. The user terminal 210 may be any computing device capable of executing an application or a web browser and capable of wired/wireless communication, for example including the mobile phone terminal 210_1, the tablet terminal 210_2, and the PC terminal 210_3 of FIG. 2. As shown, the user terminal 210 may include a memory 312, a processor 314, a communication module 316, and an input/output (I/O) interface 318. Similarly, the information processing system 230 may include a memory 332, a processor 334, a communication module 336, and an I/O interface 338. As illustrated in FIG. 3, the user terminal 210 and the information processing system 230 may be configured to communicate information and/or data through the network 220 by using the communication modules 316 and 336, respectively. In addition, the input/output device 320 may be configured to input information and/or data to the user terminal 210 or output information and/or data generated from the user terminal 210 via the I/O interface 318.

The memories 312, 332 may each include a non-transitory computer-readable recording medium. The memories 312, 332 may each include a non-volatile mass storage device such as ROM (read only memory), a disk drive, an SSD (solid-state drive), or a flash memory. As another example, a non-volatile mass storage device such as ROM, an SSD, a flash memory, or a disk drive may be included in the user terminal 210 or the information processing system 230 as a separate permanent storage device separate from the memory. Also, at least one program code and an operating system may be stored in the memories 312, 332.

Such software components may be loaded into the memories 312, 332 from another computer-readable recording medium, separate from the memories 312, 332. This separate computer-readable recording medium may include a recording medium directly connectable to the user terminal 210 or the information processing system 230, for example, a floppy drive, a disk, a tape, a DVD/CD-ROM drive, or a memory card. As another example, the software components may be loaded into the memories 312, 332 via the communication modules 316, 336 rather than from a computer-readable recording medium. For example, at least one program may be loaded into the memories 312, 332 based on a computer program installed by files distributed via the network 220 from developers or a file distribution system that distributes application installation files.

The processors 314, 334 may be configured to process instructions of a computer program by performing basic arithmetic, logic, and input/output operations. The instructions may be provided to the processors 314, 334 by the memories 312, 332 or the communication modules 316, 336. For example, each processor 314, 334 may be configured to execute instructions received, according to a program code stored in the corresponding memory 312, 332 (or another storage device).

The communication modules 316, 336 may provide a configuration or function for the user terminal 210 and the information processing system 230 to communicate with each other via the network 220, and may also provide a configuration or function for the user terminal 210 and/or the information processing system 230 to communicate with other user terminals or other systems (e.g., a separate cloud system). For example, data or requests (e.g., a video generation model training request, a photorealistic video generation request) generated by the processor 314 of the user terminal 210 according to a program code loaded into a storage device such as the memory 312 may be delivered to the information processing system 230 via the communication module 316 under its control through the network 220. Conversely, control signals or instructions provided under the control of the processor 334 of the information processing system 230 may be received by the user terminal 210 via the communication module 336 and the network 220 and then via the communication module 316 of the user terminal 210.

The I/O interface 318 may be a means for interfacing with the input/output device 320. For example, the input device may be a camera including an audio sensor and/or an image sensor, a keyboard, a microphone, or a mouse, and the output device may be a display, a speaker, a haptic feedback device, or the like. As another example, the I/O interface 318 may be a means for interfacing with a device in which a configuration or function for input and output are integrated, such as a touchscreen. For example, in processing instructions of a computer program loaded into the memory 312, the processor 314 of the user terminal 210 may cause a service screen composed of information and/or data provided by the information processing system 230 or other user terminals to be displayed via the I/O interface 318 on a display. Although FIG. 3 shows the I/O device 320 not included in the user terminal 210, the present disclosure is not limited thereto, and the user terminal 210 and the I/O device 320 may be configured as a single device. Further, the I/O interface 338 of the information processing system 230 may be a means for interfacing with an input or output device (not shown) that may be connected to or included in the information processing system 230. Although FIG. 3 illustrates the I/O interfaces 318, 338 separately from the processors 314, 334, the present disclosure is not limited thereto, and the I/O interfaces 318, 338 may be included in the processors 314, 334.

The user terminal 210 and the information processing system 230 may each include more components than those shown in FIG. 3. However, there is no need to explicitly illustrate most well-known technical components. In an example, the user terminal 210 may be implemented to include at least some of the above-mentioned I/O devices 320. Also, the user terminal 210 may further include other components such as a transceiver, a GPS (Global Positioning System) module, a camera, various sensors, or a database.

While a program for an artificial neural network model, an image generation application, and so on is operating, the processor 314 of the user terminal 210 may receive or select text, images, video, audio, and/or operations through input devices such as a touchscreen, a keyboard, a camera including an audio sensor and/or an image sensor, or a microphone, connected via the I/O interface 318, and may store the received text, images, video, audio, and/or operations in the memory 312 or provide them to the information processing system 230 through the communication module 316 and the network 220.

The processor 314 of the user terminal 210 may be configured to manage, process, and/or store information and/or data received from the I/O device 320, from another user terminal, from the information processing system 230, and/or from a plurality of external systems. The information and/or data processed by the processor 314 may be provided to the information processing system 230 via the communication module 316 and the network 220. The processor 314 of the user terminal 210 may transmit information and/or data to the I/O device 320 via the I/O interface 318 for output. For example, the processor 314 may display or output the received information and/or data on a screen of the user terminal 210.

The processor 334 of the information processing system 230 may be configured to manage, process, and/or store information and/or data received from a plurality of user terminals 210 and/or a plurality of external systems. The information and/or data processed by the processor 334 may be provided to the user terminal 210 via the communication module 336 and the network 220.

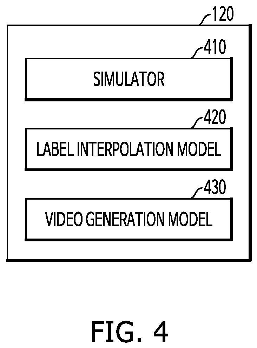

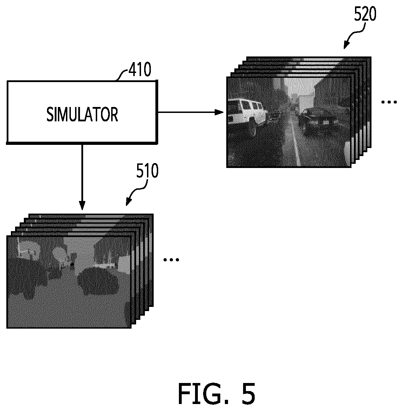

FIG. 4 is a block diagram illustrating a detailed structure of the video generation system 120. The video generation system 120 may include a simulator 410, a label interpolation model 420, and a video generation model 430. The components of the video generation system 120 shown in FIG. 4 are not all essential to implement the video generation system 120 according to the present disclosure, and thus the video generation system 120 described herein may have more or fewer components than those listed above. For example, depending on the implementation, the video generation system 120 may not include a simulator. The components of the video generation system 120 will be described below with reference to FIGS. 5 through 8.

FIG. 5 illustrates a processing of the simulator 410. The simulator 410 may be a computer simulation software that generates time-series label data 510 and time-series images 520 of a virtual domain style, such as computer graphics.

Because the simulator 410 generates the time-series label data 510 and the time-series images 520 of a virtual domain style based on an artificially designed map, it may be somewhat lacking in reflecting actual real-world conditions. However, it can generate accurate and consistent time-series label data 510 and time-series images 520 of a virtual domain style. By using the simulator 410, the execution speed may be faster and costs may be reduced compared to direct labeling, and data for various situations including aerial scenes and driving scenes may be generated. Time-series label data generated by the simulator 410 may be used for training the label interpolation model 420, among other uses.

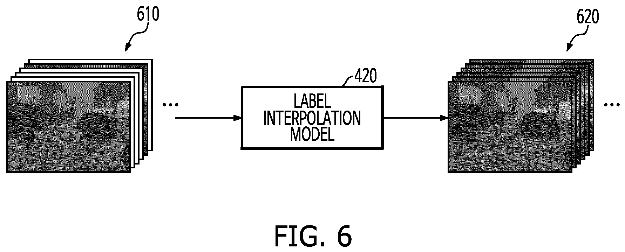

FIG. 6 illustrates a processing of the label interpolation model 420. The label interpolation model 420 may be trained to generate high-frame-rate time-series label data 620 based on low-frame-rate time-series label data 610.

In the training phase, the label interpolation model 420 may mask or exclude some label data from the time-series label data generated by the simulator 410, thereby creating a relatively low-frame-rate time-series label data, and then train itself so as to output, from the processed low-frame-rate time-series label data, the original (high-frame-rate) time-series label data generated by the simulator 410.

In the inference phase, the label interpolation model 420 may output high-frame-rate time-series label data based on low-frame-rate time-series label data. Thus, low-frame-rate time-series label data may be augmented into high-frame-rate time-series label data.

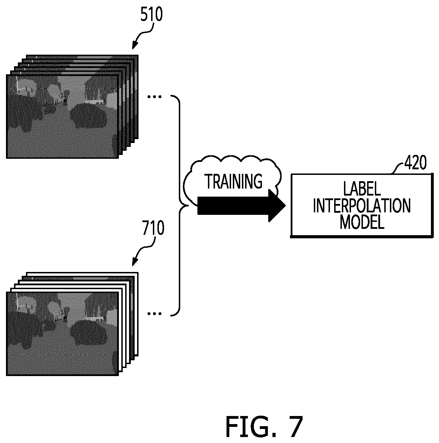

FIG. 7 is a diagram illustrating an example of a method for training the label interpolation model 420. In an example, down-sampled time-series label data 710 may be generated based on the time-series label data 510 generated by the simulator 410.

In an example, the label interpolation model 420 may be trained based on the time-series label data 510 generated by the simulator 410 and the down-sampled time-series label data 710. Specifically, the label interpolation model 420 may be trained to receive the down-sampled time-series label data 710 as input and generate the time-series label data 510 (generated by the simulator 410) as output.

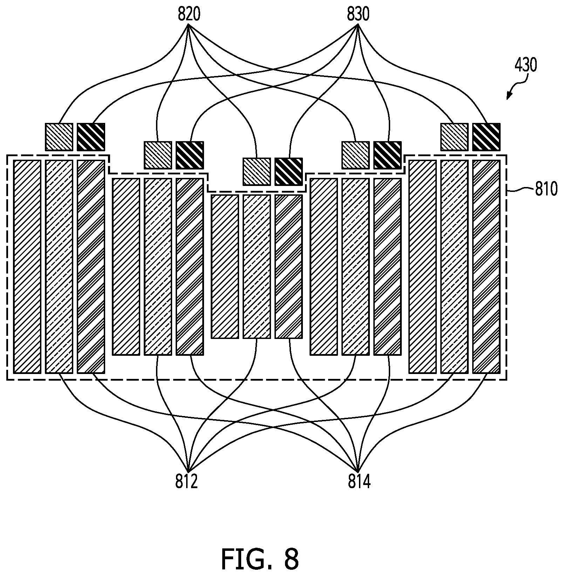

FIG. 8 illustrates a video generation model 430 associated with a real-world domain style. The video generation model 430 is trained to receive time-series label data and generate time-series images of a real-world domain style.

The video generation model 430 may be an artificial neural network model to which transfer learning and/or fine-tuning have been applied, based on a pre-trained video generation model 810. The pre-trained video generation model 810 may be a video diffusion model and could be implemented as a 3D-based artificial neural network (for example, as a 3D U-Net), which may include one additional dimension (for example, time dimension) beyond a 2D-based artificial neural network.

The pre-trained video generation model 810 may include a spatial attention layer 812, a temporal attention layer 814, and other layers (for example, a ResNet or convolution block). The spatial attention layer 812 may be used to focus on spatial characteristics of frames, such as the relationships between pixels and regions, object detection, and consideration of the spatial sizes of objects. The temporal attention layer 814 may be used to focus on temporal characteristics of the input sequence, such as detecting correlations among time steps, capturing temporal patterns, and assigning dynamic weights.

The video generation model 430 may fix existing weights of the pre-trained video generation model 810 while training changes in the weights. In other words, the video generation model 430 may update/train only parameters 820 associated with the spatial attention layer 812 and parameters 830 associated with the temporal attention layer 814 of the pre-trained video generation model 810.

The video generation model 430 may utilize a diffusion prior of the pre-trained video generation model 810. For example, the video generation model 430 may improve its training and/or inference performance by utilizing various condition information (e.g., flight conditions, driving conditions, weather conditions, illumination, seasonal information, etc., without limitation) available as a diffusion prior, in the form of modification prompts during training and/or inference stages.

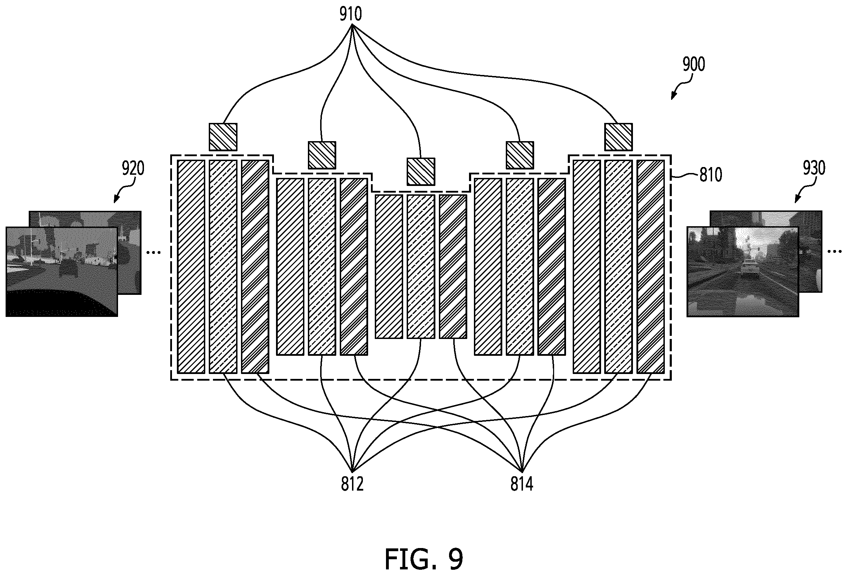

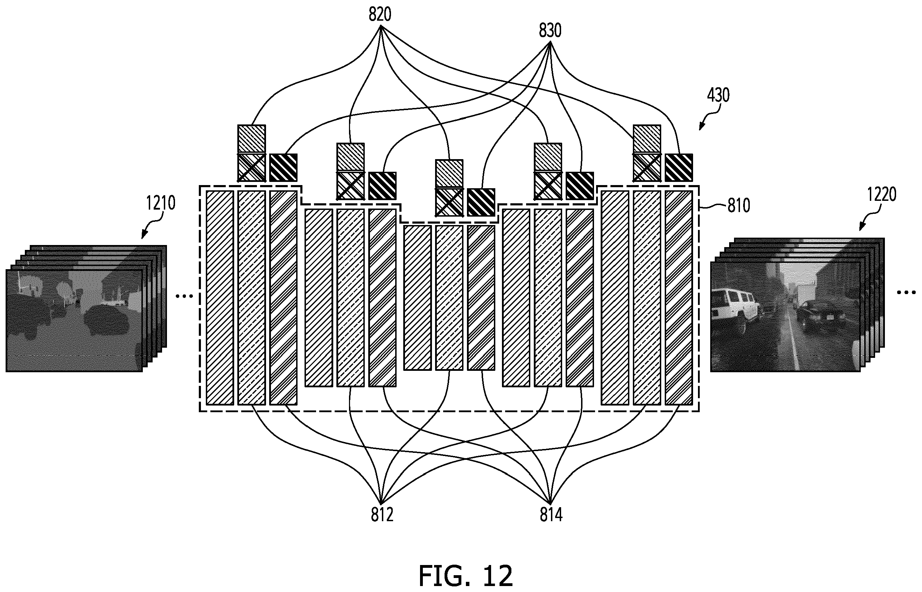

Below, the training process of the video generation model 430 will be described with reference to FIGS. 9 through 11. The inference process of the trained video generation model 430 will be described with reference to FIG. 12. These processes may be performed by at least one processor 334 of the user terminal 210 or the information processing system 230.

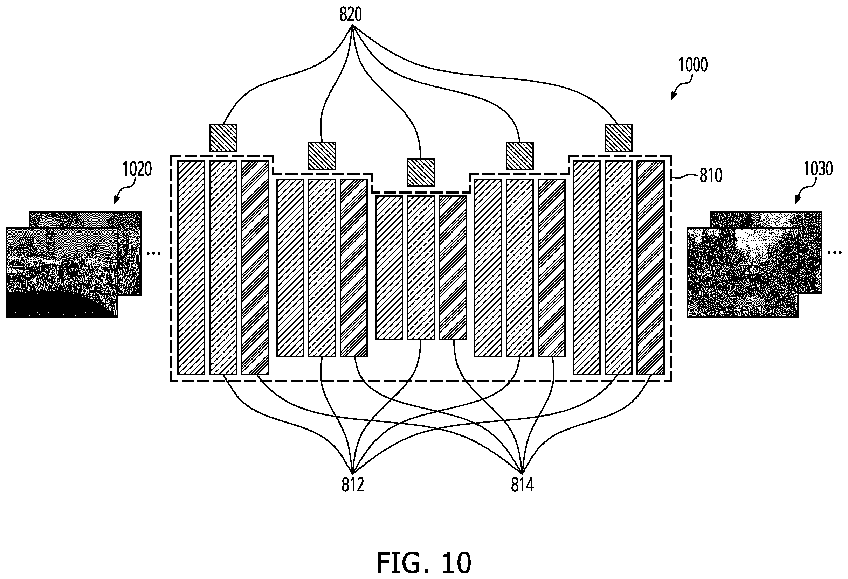

FIGS. 9 and 10 are diagrams illustrating methods for training parameters associated with a spatial attention layer of the video generation model 430.

First, FIG. 9 is a diagram illustrating an example of a method for training a first image generation model 900 associated with a virtual domain style. Referring to FIG. 9, in order to generate the video generation model 430, the first image generation model 900 may be trained. Here, the first image generation model 900 may be associated with a virtual domain style, and may be generated by fine-tuning the above-described pre-trained video generation model 810. Also, the first image generation model 900 may be trained to generate a synthetic image of the virtual domain style based on specific label data.

The processor may obtain the time-series label data and the time-series images of the virtual domain style associated with the time-series label data. For example, the processor may extract a label data subset 920 and an image subset 930 of the virtual domain style from among the time-series label data and time-series images of the virtual domain style generated by the simulator. Since this is a process of learning spatial characteristics of the first image generation model 900, each of the label data subset 920 and the image subset 930 of the virtual domain style may not be temporally continuous.

In an example, the processor may train the first image generation model 900 based on the label data subset 920 generated by the simulator and the image subset 930 of the virtual domain style generated by the simulator. Specifically, after obtaining the pre-trained video generation model 810 that includes the spatial attention layer 812 and the temporal attention layer 814, the processor may train or update parameters 910 associated with the spatial attention layer 812 of the pre-trained video generation model 810. Specifically, the processor may fix the parameters associated with the temporal attention layer 814 of the pre-trained video generation model 810 and train or update some parameters 910 associated with the spatial attention layer 812 of the pre-trained video generation model 810 based on the label data subset 920 and the image subset 930 of the virtual domain style.

FIG. 10 is a diagram illustrating an example of a method for training a second image generation model 1000 associated with a real-world domain style. Referring to FIG. 10, in order to generate the video generation model 430, the second image generation model 1000 may be trained. Here, the second image generation model 1000 may be associated with a real-world domain style, and may be generated by fine-tuning the above-described pre-trained video generation model 810. Also, the second image generation model 1000 may be trained to generate a synthetic image of the real-world domain style based on specific label data.

The processor may obtain a plurality of label data sets 1020 and a plurality of images 1030 of the real-world domain style, and may train the second image generation model 1000 associated with the real-world domain style based on the plurality of label data sets 1020 and the plurality of images 1030 of the real-world domain style.

The processor may obtain the pre-trained video generation model 810 that includes the spatial attention layer 812 and the temporal attention layer 814, fix the parameters associated with the temporal attention layer 814 of the pre-trained video generation model 810, and train or update some parameters 820 associated with the spatial attention layer 812 of the pre-trained video generation model 810 based on the plurality of label data sets 1020 and the plurality of images 1030 of the real-world domain style.

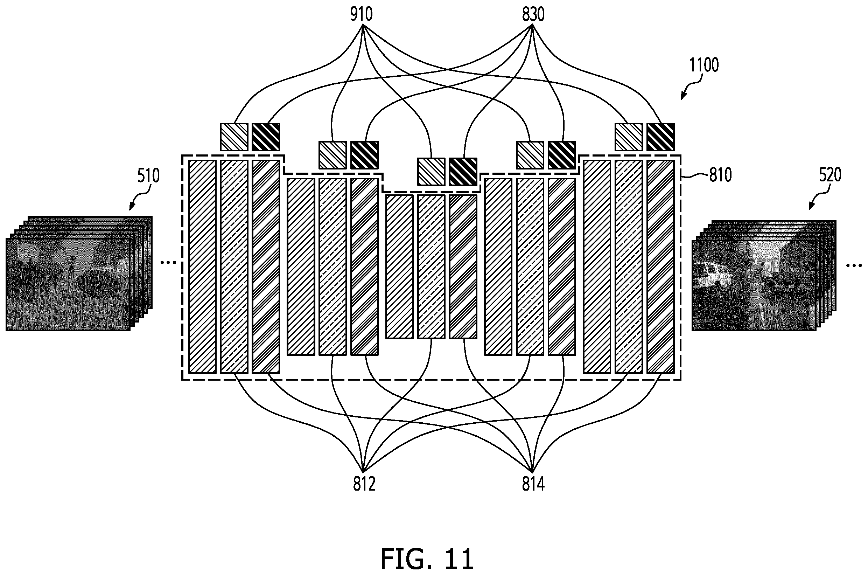

FIG. 11 is a diagram illustrating an example of a method for training a video generation model 1100 associated with a virtual domain style. Referring to FIG. 11, the processor may train the video generation model 1100 associated with a virtual domain style based on the first image generation model 900, the time-series label data 510, and the time-series images 520 of the virtual domain style. Here, the time-series label data 510 and the time-series images 520 of the virtual domain style may be data generated by the simulator 410.

The video generation model 1100 may be generated by fine-tuning the pre-trained video generation model 810, and may be trained to generate time-series images of the virtual domain style based on time-series label data.

When training the video generation model 1100 associated with a virtual domain style, the processor may fix the parameters 910 associated with the spatial attention layer 812 of the first image generation model 900, and train or update some parameters 830 associated with the temporal attention layer 814 of the first image generation model 900 based on the time-series label data 510 and the time-series images 520 of the virtual domain style.

Based on the second image generation model 1000 and the video generation model 1100, the processor may generate the above-described video generation model 430 associated with the real-world domain style. Specifically, the processor may generate the video generation model 430 associated with the real-world domain style based on the parameters 820 associated with the spatial attention layer 812 of the second image generation model 1000 and the parameters 830 associated with the temporal attention layer 814 of the video generation model 1100.

FIG. 12 is a diagram illustrating an example of an inference method of the video generation model 430 associated with a real-world domain style. The processor may generate the video generation model 430 based on the parameters 820 associated with the spatial attention layer of the second image generation model 1000 and the parameters 830 associated with the temporal attention layer of the video generation model 1100.

The processor may receive time-series label data 1210, and may generate time-series images 1220 of the real-world domain style based on the time-series label data 1210 by using the video generation model 430.

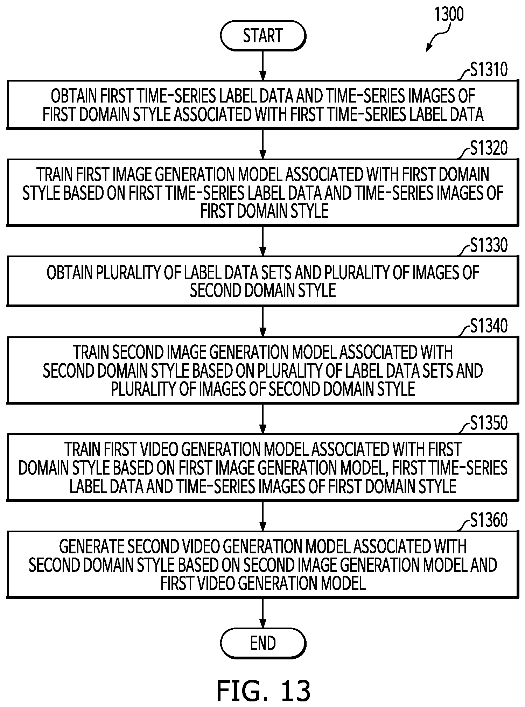

FIG. 13 is a flowchart illustrating an example of the video generation model training method 1300. The video generation model training method 1300 may be performed by at least one processor of a user terminal and/or an information processing system.

In step S1310, the processor may obtain first time-series label data and time-series images of a first domain style associated with the first time-series label data. Here, the first time-series label data and the time-series images of the first domain style may be data generated by a simulator, and the first domain style may be a virtual domain style.

In step S1320, the processor may train a first image generation model associated with the first domain style based on the first time-series label data and the time-series images of the first domain style. Specifically, the processor may extract a label data subset and an image subset of the first domain style from the first time-series label data and the time-series images of the first domain style, obtain a pre-trained video generation model including a spatial attention layer and a temporal attention layer, fix parameters associated with the temporal attention layer of the pre-trained video generation model, and train some of the parameters associated with the spatial attention layer of the pre-trained video generation model based on the label data subset and the image subset of the first domain style. Here, the first image generation model may be a model generated by fine-tuning the pre-trained video generation model, and the first image generation model may be trained to generate a synthetic image of the first domain style based on specific label data. Also, the label data subset and the image subset of the first domain style may not be temporally continuous.

In step S1330, the processor may obtain a plurality of label data sets and a plurality of images of a second domain style. Here, the second domain style may be a real-world domain style. Also, the first domain style and the second domain style may differ from each other.

In step S1340, the processor may train a second image generation model associated with the second domain style based on the plurality of label data sets and the plurality of images of the second domain style. Specifically, the processor may obtain a pre-trained video generation model including a spatial attention layer and a temporal attention layer, fix parameters associated with the temporal attention layer of the pre-trained video generation model, and train some of the parameters associated with the spatial attention layer of the pre-trained video generation model based on the plurality of label data sets and the plurality of images of the second domain style. Here, the second image generation model may be a model generated by fine-tuning the pre-trained video generation model, and the second image generation model may be trained to generate a synthetic image of the second domain style based on specific label data.

In step S1350, the processor may train a first video generation model associated with the first domain style based on the first image generation model, the first time-series label data, and the time-series images of the first domain style. Specifically, the processor may fix parameters associated with the spatial attention layer of the first image generation model and train some of the parameters associated with the temporal attention layer of the first image generation model based on the first time-series label data and the time-series images of the first domain style. Here, the first video generation model may be a model generated by fine-tuning the pre-trained video generation model, and the first video generation model may be trained to generate time-series images of the first domain style based on time-series label data.

In step S1360, the processor may generate a second video generation model associated with the second domain style based on the second image generation model and the first video generation model. Here, the second video generation model may be the above-described video generation model 430. Specifically, the processor may generate the second video generation model based on the parameters associated with the spatial attention layer of the second image generation model and the parameters associated with the temporal attention layer of the first video generation model.

**In** an example, the processor may receive second time-series label data and may generate time-series images of the second domain style based on the second time-series label data by using the second video generation model. Specifically, receiving the second time-series label data may include generating, by using the label interpolation model, third time-series label data having an up-sampled frame rate of the second time-series label data, and generating time-series images of the second domain style based on the third time-series label data by using the second video generation model.

**In** an example, the processor may down-sample the frame rate of the first time-series label data to obtain down-sampled time-series label data, and train the label interpolation model based on the down-sampled time-series label data and the existing first time-series label data.

The flowchart and description above are merely examples and may be implemented differently in some examples. For example, in some examples, the order of respective steps may be changed, some steps may be repeatedly performed, some steps may be omitted, or some steps may be added.

The method described above may be provided as a computer program stored in a computer-readable recording medium for execution on a computer. The medium may be a type of medium that continuously stores a program executable by a computer, or temporarily stores the program for execution or download. In addition, the medium may be a variety of recording means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, etc. In addition, other examples of the medium may include an app store that distributes applications, a site that supplies or distributes various software, and a recording medium or a storage medium managed by a server.

The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies depending on design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof.

Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on a computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The instructions may be executable by one or more processors, and may cause the processor(s) to perform certain aspects of the functions described in the present disclosure.

When implemented in software, the techniques may be stored on a computer-readable medium as one or more instructions or codes, or may be transmitted through a computer-readable medium. The computer-readable media include both the computer storage media and the communication media including any medium that facilitates the transmission of a computer program from one place to another. The storage media may also be any available media that may be accessible to a computer. By way of non-limiting example, such a computer-readable medium may include RAM, ROM, EEPROM, CD-ROM or other optical disk storage, magnetic disk storage or other magnetic storage devices, or any other media that can be used to transmit or store desired program code in the form of instructions or data structures and can be accessible to a computer. In addition, any connection is properly referred to as a computer-readable medium.

For example, if the software is sent from a website, server, or other remote sources using coaxial cable, fiber optic cable, twisted pair, digital subscriber line (DSL), or wireless technologies such as infrared, wireless, and microwave, the coaxial cable, the fiber optic cable, the twisted pair, the digital subscriber line, or the wireless technologies such as infrared, wireless, and microwave are included within the definition of the medium. The disks and the discs used herein include CDs, laser disks, optical disks, digital versatile discs (DVDs), floppy disks, and Blu-ray disks, where disks usually magnetically reproduce data, while discs optically reproduce data using a laser. The combinations described above should also be included within the scope of the computer-readable media.

The software module may reside in RAM memory, flash memory, ROM memory, EPROM memory, EEPROM memory, registers, hard disk, removable disk, CD-ROM, or any other form of storage medium known. An exemplary storage medium may be connected to the processor such that the processor may read or write information from or to the storage medium. Alternatively, the storage medium may be integrated into the processor. The processor and the storage medium may exist in the ASIC. The ASIC may exist in the user terminal. Alternatively, the processor and storage medium may exist as separate components in the user terminal.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in multiple processing chips or apparatus, and storage may be similarly influenced across a plurality of apparatus. Such apparatus may include PCs, network servers, and portable apparatus.

Although the present disclosure has been described in connection with some examples herein, various modifications and changes can be made without departing from the scope of the present disclosure, which can be understood by those skilled in the art to which the present disclosure pertains. In addition, such modifications and changes should be considered within the scope of the claims appended herein.

## Claims

1. A video generation model training method performed by an electronic device comprising at least one processor, the video generation model training method comprising:
obtaining (1310) first time-series label data and time-series images, of a first domain style, associated with the first time-series label data;
training (1320), based on the first time-series label data and the time-series images of the first domain style, a first image generation model associated with the first domain style;
obtaining (1330) a plurality of label data sets and a plurality of images of a second domain style;
training (1340), based on the plurality of label data sets and the plurality of images of the second domain style, a second image generation model associated with the second domain style;
training (1350) a first video generation model associated with the first domain style, wherein the training of the first video generation model is based on the first image generation model, the first time-series label data, and the time-series images of the first domain style; and
generating (1360) a second video generation model associated with the second domain style, wherein the generating of the second video generation model is based on the second image generation model and the first video generation model,
wherein the first domain style and the second domain style are different from each other.

2. The video generation model training method according to claim 1, wherein the first domain style is a virtual domain style, and the second domain style is a real-world domain style.

3. The video generation model training method according to claim 1, wherein the training of the first image generation model comprises:
extracting a label data subset from the first time-series label data and extracting an image subset of the first domain style from the time-series images of the first domain style, wherein the label data subset is associated with the image subset of the first domain style;
obtaining a pre-trained video generation model including a spatial attention layer and a temporal attention layer; and
fixing parameters associated with the temporal attention layer of the pre-trained video generation model and training, based on the label data subset and the image subset of the first domain style, at least one parameter of parameters associated with the spatial attention layer of the pre-trained video generation model,
wherein the first image generation model is a model generated by fine-tuning the pre-trained video generation model, and
wherein the first image generation model is trained to generate a synthetic image of the first domain style based on specific label data.

4. The video generation model training method according to claim 3, wherein the label data subset and the image subset of the first domain style are not temporally continuous.

5. The video generation model training method according to claim 1, wherein the training of the second image generation model comprises:
obtaining a pre-trained video generation model including a spatial attention layer and a temporal attention layer; and
fixing parameters associated with the temporal attention layer of the pre-trained video generation model and training, based on the plurality of label data sets and the plurality of images of the second domain style, at least one parameter of parameters associated with the spatial attention layer of the pre-trained video generation model,
wherein the second image generation model is a model generated by fine-tuning the pre-trained video generation model, and
wherein the second image generation model is trained to generate a synthetic image of the second domain style based on specific label data.

6. The video generation model training method according to claim 3, wherein the training of the first video generation model comprises:
fixing parameters associated with a spatial attention layer of the first image generation model and training, based on the first time-series label data and the time-series images of the first domain style, at least one parameter of parameters associated with a temporal attention layer of the first image generation model,
wherein the first video generation model is a model generated by fine-tuning the pre-trained video generation model, and
wherein the first video generation model is trained to generate time-series images of the first domain style based on time-series label data.

7. The video generation model training method according to claim 1, wherein the generating of the second video generation model comprises:
generating, based on parameters associated with a spatial attention layer of the second image generation model and parameters associated with a temporal attention layer of the first video generation model, the second video generation model.

8. The video generation model training method according to claim 1, further comprising:
receiving second time-series label data; and
generating, by using the second video generation model, time-series images of the second domain style based on the second time-series label data.

9. The video generation model training method according to claim 1, further comprising:
down-sampling a frame rate of the first time-series label data to obtain down-sampled time-series label data; and
training, based on the down-sampled time-series label data and the first time-series label data, a label interpolation model (420).

10. The video generation model training method according to claim 9, further comprising:
receiving second time-series label data;
generating, by using the label interpolation model (420), third time-series label data having an up-sampled frame rate of the second time-series label data; and
generating, by using the second video generation model, time-series images of the second domain style based on the third time-series label data.

11. A non-transitory computer-readable medium storing computer-readable instructions that, when executed by at least one processor, is configured to cause an electronic device to:
obtain first time-series label data and time-series images, of a first domain style, associated with the first time-series label data;
train, based on the first time-series label data and the time-series images of the first domain style, a first image generation model associated with the first domain style;
obtain a plurality of label data sets and a plurality of images of a second domain style;
train, based on the plurality of label data sets and the plurality of images of the second domain style, a second image generation model associated with the second domain style;
train a first video generation model associated with the first domain style, wherein training of the first video generation model is based on the first image generation model, the first time-series label data, and the time-series images of the first domain style; and
generate a second video generation model associated with the second domain style, wherein generating of the second video generation model is based on the second image generation model and the first video generation model,
wherein the first domain style and the second domain style are different from each other.

12. An electronic device comprising:
a memory storing computer-readable instructions; and
at least one processor connected to the memory and configured to execute the computer-readable instructions,
wherein the computer-readable instructions, when executed by the at least one processor, are configured to cause the electronic device to:
obtain first time-series label data and time-series images, of a first domain style, associated with the first time-series label data,
train, based on the first time-series label data and the time-series images of the first domain style, a first image generation model associated with the first domain style,
obtain a plurality of label data sets and a plurality of images of a second domain style,
train, based on the plurality of label data sets and the plurality of images of the second domain style, a second image generation model associated with the second domain style,
train a first video generation model associated with the first domain style, wherein training of the first video generation model is based on the first image generation model, the first time-series label data, and the time-series images of the first domain style, and
generate a second video generation model associated with the second domain style, wherein generating of the second video generation model is based on the second image generation model and the first video generation model,
wherein the first domain style and the second domain style are different from each other.
